# EUROPÄISCHE PATENTSCHRIFT

(11) **EP 2 441 003 B1**
(45) Veröffentlichungstag und Bekanntmachung des Hinweises auf die Patenterteilung: **29.07.2015**
(21) Anmeldenummer: 10752291.4
(22) Anmeldetag: 03.08.2010
(51) Int. Cl.: G06F 11/14, G06F 11/16, G06F 11/07, G06F 7/483

(54) **GLEITKOMMAARITHMETIK MIT FEHLERERKENNUNG**
FLOATING POINT ARITHMETIC WITH ERROR RECOGNITION
ARITHMÉTIQUE À VIRGULE FLOTTANTE AVEC DÉTECTION D'ERREUR

(43) Veröffentlichungstag der Anmeldung: 18.04.2012
(73) Patentinhaber: Siemens Aktiengesellschaft, 80333 München (DE)
(72) Erfinder: RICHTER, Jan, 91207 Lauf a.d. Pegnitz (DE)
(86) Internationale Anmeldenummer: PCT/EP2010/004753
(87) Internationale Veröffentlichungsnummer: WO 2012/016574

(56) Entgegenhaltungen:
- EP-A2- 1 355 230
- US-A1- 2009 183 035
- RUMP S M: "Fast and parallel interval arithmetic", BIT, Bd. 39, Nr. 3, September 1999 (1999-09), Seiten 534-554, XP002629774, SWETS & ZEITLINGER, Lisse, The Netherlands ISSN: 0006-3835

## Beschreibung

### Fachgebiet der Erfindung

In der industriellen Automation spielt das Thema der Maschinensicherheit, auch funktionale Sicherheit genannt, eine zunehmende Rolle. Gegenstand der funktionalen Sicherheit ist die Forderung, dass potentiell für Mensch oder Umwelt gefährliche Vorgänge einer Risikoreduzierung bedürfen, wenn das Ausgangsrisiko inakzeptabel hoch ist. Diese Betrachtung betrifft Maschinen wie Pressen, Walzen, robotische Manipulatoren, die Gleisbelegung auf Schienennetzen, den Betrieb von Seilbahnen, und anderes mehr. Die Bedeutung der funktionalen Sicherheit wird untermauert durch Normung, wie etwa durch die allgemeine Grundnorm IEC 61508 für elektrische und elektronische Systeme.

Funktionale Sicherheit betrifft alle Glieder einer Sicherheitskette. Zentrales Kernelement der Sicherungskette ist jedoch die Steuerung, welche die Entscheidung über eine Überführung der Anlage in den sicheren Zustand trifft. Der Begriff der Steuerung umfasst hier jede Form von speicherprogrammierbarer Steuerung, also sowohl echte Hardware-Steuerungen als auch moderne Realisierungen wie Soft-SPS (z. B. Siemens WinAC RTX) auf Embedded Controllern, Industrie-PC, o. ä..

Klassisch werden Sicherheitsfunktionen vorwiegend als logische Entscheidungen definiert, zu deren Darstellung logische Daten (BOOLEAN) sowie Ganzzahlen (INT, DINT) hinreichend sind. Der typische Eingriff eines derartigen Sicherungssystems besteht im Abschalten von Energiezufuhren. Zunehmend verlagert sich der Schwerpunkt zu komplexeren Sicherungsfunktionen. Diese Entwicklung wird stark getrieben von Anwendungen im Bereich der Bewegungssteuerung. Gefordert sind dort neuerdings Funktionen wie "sichere Geschwindigkeit", "sichere Position", "sicherer Stopp", "sicheres Moment", und andere, deren Bearbeitung den Umgang mit Gleitkommazahlen erfordert. Weitere Impulse für die Erweiterung auf Gleitkommazahlen kommen aus dem Bereich der Prozesssteuerung.

### Stand der Technik

Für die Realisierung fehlersicherer Steuerungen stehen zwei Prinzipien zur Verfügung: Hardware-Diversität und Software-Diversität.

Die Hardware-Diversität beruht auf der Nutzung paralleler und gegebenenfalls diversitärer Rechenwerke mit nachgelagerter Konsistenzprüfung. Sie ist Stand der Technik und wird am Markt von zahlreichen Herstellern zur Darstellung logischer Sicherheitsfunktionen genutzt.

Eine Lösung mittels Software-Diversität wird beispielsweise in der F-Serie der SIMATIC-Produktlinie der Firma Siemens verwendet. Sicherheitsprogramme in Distributed Safety können bisher, wie oben bereits beschrieben, nur auf den Datentypen BOOL, INT, und DINT aufbauen und damit vorwiegend logische Sicherungsfunktionen darstellen. Die Absicherung beruht auf einer diversitären internen Darstellung mittels arithmetischer Codes. Diese Lösung ist beispielsweise aus der Druckschrift DE 102 19 501 bekannt.

Eine Anwendung dieser Lösung auf Gleitkommazahlen mittels arithmetischer Codes wurde konzeptionell untersucht und für nicht hinreichend performant für eine Produktanwendung befunden. Die erreichten Ausführungszeiten sind wegen der Komplexität der Verarbeitung zu lang, insbesondere wenn eine Anwendung in einem Echtzeitsystem erforderlich ist.

Des Weiteren treten bei Gleitkommazahlen Rundungsprobleme auf, die für die Realisierung funktionaler Sicherheit weitere Schwierigkeiten aufwerfen und durch das Konzept arithmetischer Codes gar nicht abgedeckt sind.

Aufgrund dieser Situation sind hardwareunabhängig und hardware-einkanalig sichere Gleitkommaoperationen bisher nicht am Markt vorhanden.

Aus der US 2009/0183035 A1 ist bereits ein Prozessor beschrieben, bei dem eine Berechnung mit Fehlererkennung durchgeführt wird. Dabei werden Ganzzahl-Berechnungen durch eine Vielzahl von Ganzzahl-Berechnungseinheiten eine Berechnung gleichzeitig durchgeführt und die Berechnungsergebnisse verglichen. Gleitkommaoperationen werden mindestens zweimal durchgeführt und die Ergebnisse ebenfalls verglichen.

Es ist Aufgabe der Erfindung, ein Verfahren und eine Vorrichtung anzugeben, welches eine Software-Diversität der genannten Art für Gleitkommaarithmetik bietet, unter Vermeidung der oben genannten Nachteile. Insbesondere soll das beschriebene Verfahren auch in Echtzeitumgebung anwendbar sein.

Weiterhin soll mit dieser Erfindung auf einer nicht hardwareredundanten Standard-CPU ein Safety Integrity Level 3 (SIL 3) nach IEC 61508 für Rechnungen mit Gleitkommazahlen erreicht werden.

### Darstellung der Erfindung

Diese Aufgabe wird gelöst durch ein Verfahren gemäß Patentanspruch 1.

Das Verfahren zur Durchführung einer fehlersicheren, hardwareunabhängigen Gleitkommaarithmetik in einem Automatisierungssystem während der Laufzeit eines Programms, umfasst folgende Schritte:
aus zumindest zwei Ausgangs-Daten, bei denen es sich um Gleitkommazahlen handelt, werden in einer ersten Berechnung in Gleitkommadarstellung in Standard-Gleitkommaarithmetik ein erstes Ergebnis ermittelte, und
die zumindest zwei Ausgangs-Daten von Gleitkommadarstellung werden jeweils in eine geeignete Gleitkomma-Intervalldarstellung umgewandelt und
eine zur ersten Berechnung analoge zweite Berechnung aus den zumindest zwei in Gleitkomma-Intervalldarstellung umgewandelten Daten wird, insbesondere innerhalb eines Rechenzyklus zur ersten Berechnung ausgeführt, die ein Ergebnis-Intervall ermittelt
wobei das erste Ergebnis der ersten Berechnung anhand des Ergebnis-Intervalls der zweiten Berechnung auf fehlerhafte Berechnung überprüft wird.

Die Aufgabe wird weiterhin gelöst mit einer Vorrichtung gemäß Patentanspruch 12.

Bei dem Gegenstand handelt es sich um ein Verfahren und eine Vorrichtung zur performanten Absicherung der Rechnung mit Gleitkommazahlen beliebiger Genauigkeit im Sinne der funktionalen Sicherheit nach IEC 61508. Das Verfahren nutzt eine spezielle Form der Software-Diversität und hat Auswirkungen sowohl auf die Runtime-Umgebung als auch auf die Engineering-Umgebung.

### Laufzeit / Runtime:

Basis des Verfahrens ist eine doppelte Darstellung der Daten und Operanden innerhalb der Steuerung in unterschiedlicher Form. Schlüssel des Verfahrens ist die Art der gewählten diversitären Darstellung, die auf Intervallen beruht. Dabei wird jeder Parameter und Operand x (eine eigentlich als im Allgemeinen nicht darstellbare reelle Zahl) durch ein Intervall A = <a_{mid,}a_{rad}> aus zwei darstellbaren Gleitkommazahlen garantiert eingeschlossen.

Die Parameter eines Gleitkomma-Intervalls sind der Mittelpunkt a_{mid} und der Radius a_{rad}. Während des Betriebs werden alle Rechnungen doppelt durchgeführt, einmal uncodiert konventionell, und einmal codiert auf den genannten Intervallen. Durch die Eigenschaften der Intervallarithmetik ist gesichert, dass die Schattenrechnung im Intervallbereich stets das wahre Ergebnis einschließt. Die Intervallarithmetik ist für die vier Grundrechenarten Addition, Subtraktion, Multiplikation, und Division verfügbar, sowohl für skalare Operationen als auch für Vektor/Matrix-Operationen. Über Reihenentwicklungen bzw. Tabellen und Interpolation ist sie auch für komplexere Funktionen, wie transzendente Funktionen (trigonometrische Funktionen, Exponentialfunktion, usw.), verfügbar.

Durch folgende Konsistenzprüfungen können Fehler aufgedeckt werden:
- großer Konsistenztest:
   Prüfung, ob Originaldatum in Intervalldatum enthalten ist. Diese Prüfung deckt Inkonsistenzen zwischen Originaldatum und Intervall auf, die auf Verfälschungen infolge zufälliger Fehler zurückgehen.
- kleiner Konsistenztest:
   Prüfung, ob die Intervallbreite zulässig ist.
      Diese Prüfung ermöglicht eine gesicherte Aussage über die aktuell gewährleistete Rechengenauigkeit. Bei Über- oder Unterschreitung einer vom Anwender wählbaren Schwelle kann ein Alarm ausgelöst werden und ggf. können Anlagenteile in einen sicheren Zustand überführt werden. Sie hilft außerdem bei der Absicherung gegen bestimmte deterministische Hardware Fehler.
   • Prüfung auf korrekte Ausführung der Operationen anhand operandenabhängiger Tests:
      Durch begleitende Prüfung geltender mathematischer Identitäten für die vorliegenden Operanden werden gefährliche systematische Fehlfunktionen der Operationen aufgedeckt, auch wenn ihre Wirkung operandenabhängig ist.

Weitere vorteilhafte Ausgestaltungen sind in den Unteransprüchen beschrieben.

Der Safety Integrity Level (SIL) ist ein Maß zur Ermittlung des potentiellen Risikos von Systemen, Geräten und Prozessen im Falle einer Fehlfunktion. Die Basis für die Spezifikationen, den Entwurf und Betrieb von sicherheitstechnischen Systemen (SIS) bildet der IEC-Standard 61508.

Diese Sicherheitsstufen SIL sind u. a. von der Safe Failure Fraction (SFF) und der Hardware Fault Tolerance (HFT) abhängig. Die Safe Failure Fraction eines Systems wird wiederum durch das Verhältnis zweier Fehlerarten bestimmt: durch sichere Fehler und als gefährlich erkannte Fehler. Sie werden in einem separaten Bericht hergeleitet. Genaueres ist der IEC 61508 zu entnehmen.

Die Performance der Lösung ergibt sich aus dem Aufwand für die Realisierung einer Intervallarithmetik. Dieser Aufwand ist insgesamt moderat.

Die diversitäre Darstellung umfasst jegliche Darstellung als Intervall, gleichgültig welche der möglichen Darstellungen verwendet wird (Mittelpunkt/Radius-Darstellung, Infimum/Supremum-Darstellung, oder weitere Darstellungen).

Aufgrund der spezifischen Anforderungen der Sicherheitsanwendungen, insbesondere aufgrund des zyklischen Zurücksetzens der Intervallbreite, ist die Mittelpunkt/Radius-Darstellung besonders vorteilhaft.

In einer vorteilhaften Ausprägung der Erfindung werden zur Aufdeckung von Fehlern und zur Aufdeckung schlechter numerischer Kondition zwei getrennte Intervalle verwendet. Die Intervallbreite zur Fehleraufdeckung kann in diesem Fall nach jeder erfolgreichen Operation auf Null zurückgesetzt werden, was besonders hohe Diagnosedeckungsgrade ermöglicht. Die Intervalldarstellung zur Aufdeckung schlechter Kondition kann optional weggelassen werden, wenn nur Fehleraufdeckung gefordert ist.

In einer weiteren vorteilhaften Ausprägung wird diese Sicherung gegen zufällige Fehler durch zusätzliche zyklische Selbsttests der Gleitkomma-Einheit der SPS gegen systematische Fehler ergänzt.

In einer weiteren vorteilhaften Ausführung werden die Intervallparameter zusätzlich im Einer-Komplement oder anhand eines arithmetischen Codes codiert abgelegt und vor jeder Verarbeitung vollständig decodiert.

In einer weiteren vorteilhaften Ausprägung (basierend auf einem zurückgesetzten Intervall und arithmetischer Codierung des Intervall-Mittelpunkts) wird die lexikalische Ordnung der IEEE 754-konformen Darstellung von Gleitkommazahlen zum arithmetisch codierten Vergleich von Gleitkommazahl-Intervallen herangezogen. Dann müssen die arithmetisch codierten Operanden zum Vergleich nicht decodiert werden.

### Engineering

Die Engineering-Umgebung eines Automatisierungssystems wird so erweitert, dass bei der Übersetzung des F-Programms der Intervall-Schatten des Gleitkomma-Anwenderprogramms von einem Compiler erzeugt wird. Dabei werden zu jedem Baustein entsprechende interne Systembausteine erzeugt, die einen Intervall-Schatten des Programms enthalten und diesen zur Laufzeit abarbeiten.

In einer vorteilhaften Ausprägung wird die Engineering-Umgebung erweitert um eine Prüfung des Anwenderprogramms auf numerische Stabilität für einen zu erwartenden Zahlenumfang. Dadurch kann der Anwender prüfen, ob sein Programm numerisch stabil läuft oder ob der Betrieb des gesteuerten Prozesses durch Rechenprobleme in der Steuerung gefährdet ist.

Das Gesamtkonzept besteht aus:
- einer spezifischen Erweiterung der Engineering-Umgebung zur Erzeugung von Gleitkomma-Anwenderprogrammen mit IntervallAbbild,
- einer Erweiterung der Laufzeit-Umgebung zur Bearbeitung des Intervall-Schattens eines Gleitkomma-Anwenderprogramms,
- zumindest einer failsafe-spezifischen Konsistenzprüfung, die zur Aufdeckung von Fehlern ausgelegt ist.

Das beschriebene Verfahren ermöglicht erstmals einen Zugang zur Absicherung von Gleitkommazahlen auf einkanaliger Hardware, der in akzeptabler Effizienz auf einer Laufzeit-Umgebung realisiert werden kann. Es ist damit ein Schlüssel zu neuen, höheren Sicherheitsfunktionen insbesondere in den Anwendungsfeldern der Bewegungssteuerung und Prozessautomatisierung. Der Vorteil ergibt sich aus dem erheblich geringeren Aufwand gegenüber der Absicherung von Gleitkommazahlen mittels arithmetischen Codes. Des Weiteren ist die Lösung von den Details der Hardware unabhängig.

Die Erweiterung des Engineering liefert eine Beurteilung der numerischen Stabilität seiner Gleitkommazahlen verarbeitenden Programme. Eine solche Unterstützung für den Anwender existiert bislang nicht.

Sie kann auch außerhalb des Bereichs fehlersicherer Software Verwendung finden und den Anwender bei der Formulierung seiner Programme unterstützen.

Schließlich ermöglicht das Verfahren die Erschließung der Gleitkommaarithmetik für fehlersichere Rechnung, ohne den Vorteil der Hardwareunabhängigkeit und die damit verbundene Freiheit bei der Gestaltung der zugrunde liegenden Prozessoren aufzugeben. Vielmehr ermöglicht es eine nahtlose Integration in das bestehende Konzept der Software-Diversität von Distributed Safety.

Das beschriebene Verfahren erhöht die Komplexität der abgesicherten Schatten-Operationen gegenüber den Original-Operationen. Allerdings ist der zusätzliche Aufwand erheblich geringer als bei entsprechenden hypothetisch arithmetisch codierten Gleitkommaoperationen.

### Beschreibung der bevorzugten Ausgestaltungsformen

Kurzbeschreibung der Zeichnungen Im Folgenden wird die Erfindung anhand von Ausführungsbeispielen erläutert. Dabei zeigen
- Figur 1: eine schematische Darstellung der durchgeführten Berechnungen,
- Figur 2: ein Beispiel zur Berechnung mit Gleitkommazahlen,
- Figur 3: das Verfahren mit zusätzlicher Prüfung.

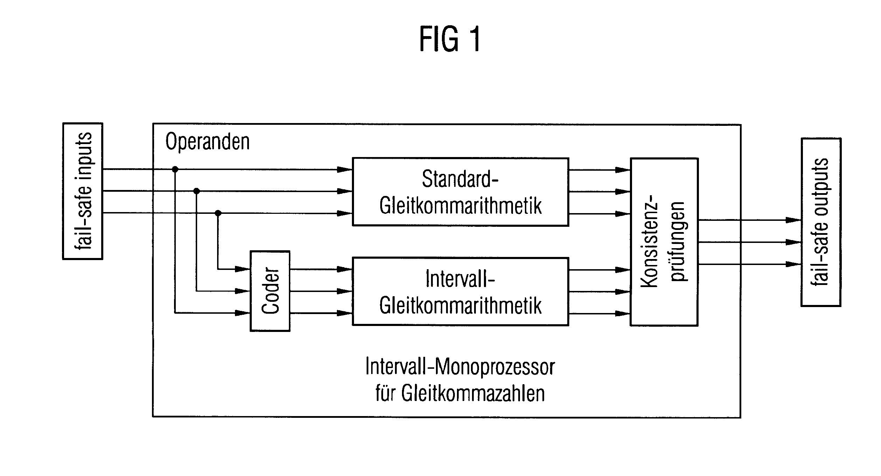

Während des Betriebs werden alle Rechnungen doppelt durchgeführt, siehe Figur 1.

Die Operanden werden in den geeigneten Prozessor eingespeist, einmal in unveränderter Form und dann durch den Coder umgewandelt in codierte Form. Ein erstes Rechenergebnis erhält man mittels Standard-Gleitkommaarithmetik. Der Intervallschatten wird durch eine zweite Berechnung mittels Intervall-Gleitkommaarithmetik errechnet.

In der anschließenden Konsistenzprüfung wird, wie oben beschrieben, das erhaltene Rechenergebnis zusammengeführt und auf Fehlerhaftigkeit untersucht. Erst danach wird das berechnete Ergebnis weitergegeben, sofern die Korrektheit der Berechnung bestätigt wurde.

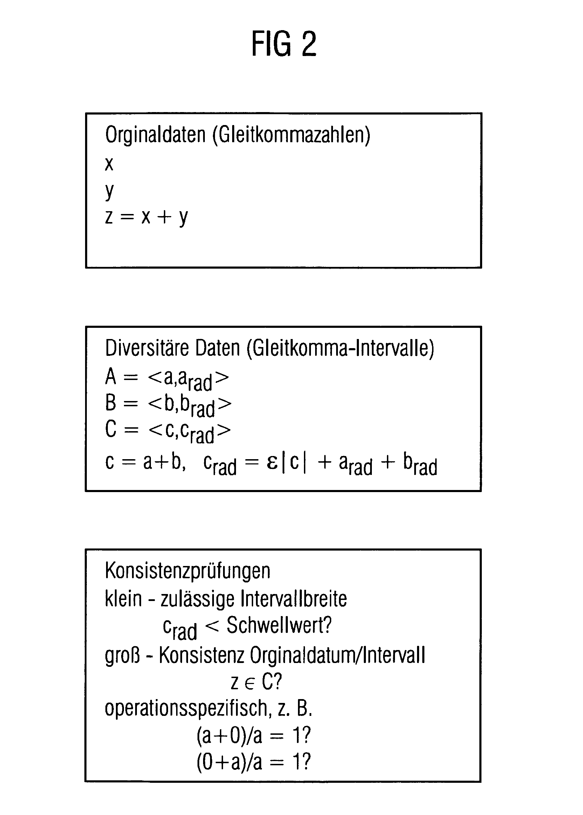

Figur 2 zeigt ein Beispiel einer diversitären Addition nach dem beanspruchten Verfahren:

In folgendem Beispiel bezeichnen x und y zwei Gleitkommazahl-Operanden, die hier addiert werden sollen. Das Additionsergebnis wird mit z bezeichnet. Es bezeichnen A das Intervallabbild von x, B das Intervallabbild von y, und C das Intervallabbild von z. Das Symbol E bezeichnet die Maschinengenauigkeit (für 32-Bit Gleitkommazahlen nach IEEE 754 gilt ε = 5.960464 * 10⁻⁸).

Konsistenzprüfungen werten die Diversität der Intervalldarstellung zur Aufdeckung von Fehlern aus.

In einer Konsistenzprüfung bezüglich einer zulässigen Intervallbreite ist der Schwellwert für c_{rad} ein vom erforderlichen Diagnosedeckungsgrad und der Operation abhängiger Wert, der in der Größenordnung der Maschinengenauigkeit liegt. Die Größe des Schwellwertes legt fest, bis zu welcher Größe Verfälschungen akzeptabel sind.

Anhand dieser Prüfungen können sowohl explodierende Rundungsfehler (aufgrund schlechter numerischer Kondition der Daten oder des Algorithmus) als auch gefährliche Verfälschungen durch Hardware- oder Software-Fehler entdeckt werden. Auch eine Konzentration auf reine Aufdeckung gefährlicher Verfälschungen ist problemlos möglich.

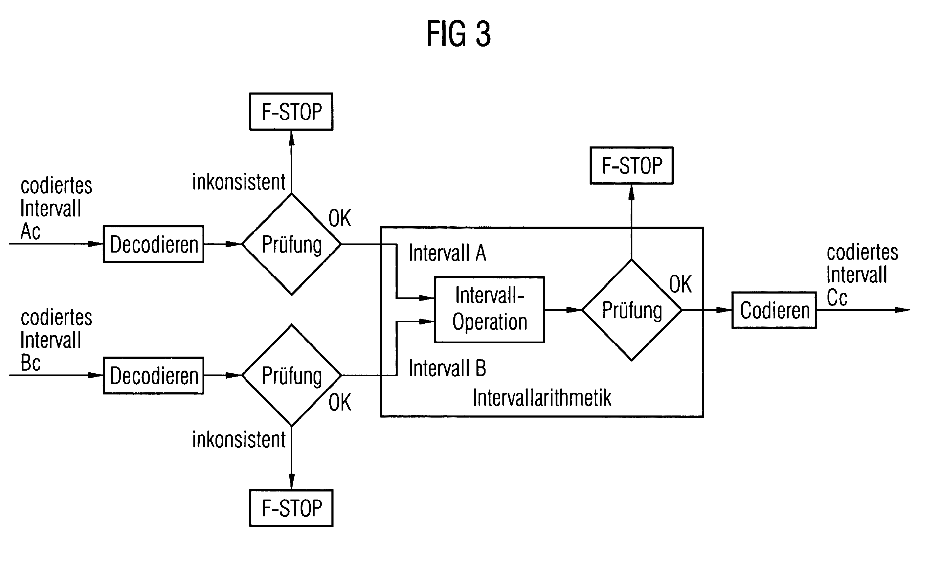

Vorteilhaft ist die Integration von Echtzeit (Runtime)-Umgebung und Engineering-Komponente. Figur 3 zeigt eine Verbindung der Intervallarithmetik mit arithmetischen Codes, um die Daten während des Transportes zu schützen. Die Intervalle zur Berechnung (codiertes Intervall Ac und Bc) werden jeweils Decodiert und eine Prüfung auf Inkonsistenzen unterzogen. Fällt die Prüfung negativ aus, wird das System angehalten (F-STOP). Ansonsten wird die Intervall-Operation anhand der decodierten Intervalle (A, B) in der Intervallarithmetik durchgeführt. Das Ergebnis (Intervall C) wird dann erneut einer Prüfung unterzogen und bei korrektem Ergebnis wieder codiert (codiertes Intervall Cc).

Des Weiteren betrifft die Integration z. B. eine sichere Ankopplung von Sensordaten des Datentyps REAL und die sichere Ausgabe von Aktordaten des Datentyps REAL, sowie die Ankopplung an gängige Busprotokolle, (Profibus als auch über Profinet).

## Patentansprüche

1. Verfahren zur Durchführung einer, Gleitkommaarithmetik in einem Automatisierungssystem während der Laufzeit eines Programms in Echtzeit, bei dem
aus zumindest zwei Ausgangs-Daten (x, y), bei denen es sich um Gleitkommazahlen handelt,
in einer ersten Berechnung in Gleitkommadarstellung in Standard-Gleitkommaarithmetik ein erstes Ergebnis (z) ermittelte wird, und
die zumindest zwei Ausgangs-Daten (x, y) von Gleitkommadarstellung jeweils in eine geeignete Gleitkomma-Intervalldarstellung (A = <a, a_{rad}>, B= <b, b_{rad}>) umgewandelt werden und
eine zur ersten Berechnung analoge zweite Berechnung aus den zumindest zwei in Gleitkomma-Intervalldarstellung umgewandelten Daten, insbesondere zeitgleich zur ersten Berechnung ausgeführt wird,
welche ein Ergebnis-Intervall (C=<c, c_{rad}>) ermittelt wobei
das erste Ergebnis (z) der ersten Berechnung anhand des Ergebnis-Intervalls (C=<c, c_{rad}>) der zweiten Berechnung (c, c_{rad}) auf fehlerhafte Berechnung überprüft wird.

2. Verfahren nach Patentanspruch 1,
**dadurch gekennzeichnet, dass**
das Gleitkomma-Intervall definiert ist durch einen Mittelpunkt (c) und einen Radius (c_{rad}).

3. Verfahren nach Patentanspruch 1,
**dadurch gekennzeichnet, dass**
das Gleitkomma-Intervall definiert ist durch einen Minimalwert und einen Maximalwert.

4. Verfahren nach einem der vorherigen Patentansprüche,
**dadurch gekennzeichnet dass**
die Überprüfung des ersten Ergebnisses (z) dahingehend erfolgt, ob es im insbesondere zeitgleich mittels der zur ersten Berechnung analogen zweiten Berechnung ermittelten Ergebnis-Intervall (z ∈ C) liegt.

5. Verfahren nach einem der vorherigen Patentansprüche, **dadurch gekennzeichnet dass**
das insbesondere zeitgleich mittels der zur ersten Berechnung analogen zweiten Berechnung ermittelten Ergebnis-Intervall (C=<c, c_{rad}>) eine zulässige Intervallbreite (c_{rad} < Schwellwert) aufweist.

6. Verfahren nach einem der Patentansprüche 1 bis 3, **dadurch gekennzeichnet dass**
die Überprüfung mittels operandenabhängiger Tests ((a + 0)/a = 1?) geschieht.

7. Verfahren nach einem der vorherigen Patentansprüche, **dadurch gekennzeichnet, dass**
die zu testenden Sicherheitsparameter wählbar und/oder quantifizierbar sind.

8. Verfahren nach einem der vorherigen Patentansprüche,
**dadurch gekennzeichnet, dass**
eine erste Überprüfung zur Sicherstellung der fehlersicheren Berechnung mittels einer ersten Intervall-Darstellung und
eine zweite Überprüfung der numerischen Kondition mittels einer zweiten Intervall-Darstellung durchgeführt wird.

9. Verfahren nach Patentanspruch 8, **gekennzeichnet dadurch, dass**
das Ergebnis der Überprüfung in einem separaten Überprüfungs-Bericht aufgenommen wird.

10. Verfahren nach einem der vorherigen Patentansprüche, **dadurch gekennzeichnet dass**
zusätzlich und unabhängig von den durchgeführten Gleitkomma-Arithmetik-Berechnungen ein periodisch wiederkehrender Selbsttest der Recheneinheit (Monoprozessor) durchgeführt wird.

11. Verfahren nach einem der vorherigen Patentansprüche, **dadurch gekennzeichnet dass**
die Daten in eine geeigneter Gleitkomma-Intervalldarstellung zusätzlich codiert abgelegt werden, insbesondere in Einerkomplement oder arithmetischem AN-Code codiert.

12. Vorrichtung zur Durchführung einer Gleitkommaarithmetik in einem Automatisierungssystem während der Laufzeit eines Programms in Echtzeit ,
umfassend eine Engineering-Umgebung des AutomatisierungsSystems und einen Prozessor angepasst zur Durchführung des Verfahrens nach einem der Patentansprüche 1 bis 11.

13. Vorrichtung nach Patentanspruch 12,
**dadurch gekennzeichnet, dass**
zu einem Anwendungsprogramm ein entsprechendes Intervallabbild erzeugt wird, welcher die Daten in eine geeignete Gleitkomma-Intervalldarstellung enthält.

14. Vorrichtung nach Patentanspruch 12 oder 13,
**dadurch gekennzeichnet, dass**
Mittel zum Empfang eines codierten Intervalls (Ac, Bc) und Mittel zum Decodieren (Decodieren) des empfangenen Intervalls und
Mittel zur Prüfung(Prüfung) des decodierten Intervalls (A, B) sowie
Mittel zur Codierung (Codieren) der neuberechneten Interfalls (C) in ein codiertes Intervall (Cc) enthalten sind.

15. Vorrichtung nach einem der Patentansprüche 12 bis 14,
**dadurch gekennzeichnet, dass**
eine Ankopplung an ein Busprotokoll, insbesondere PROFIBUS, möglich ist.

## Claims

1. Method for performing floating-point arithmetic in an automation system during the runtime of a program in real time, in which
from at least two items of starting data (x, y), these being floating-point numbers,
a first result (z) is established in a first calculation in floating-point notation using standard floating-point arithmetic, and
the at least two items of starting data (x, y) in floating-point notation are each converted into a suitable floating-point interval notation (A = <a, a_{rad}>, B = <b, b_{rad}>), and
from the at least two items of data that have been converted into floating-point interval notation, a second calculation which is analogous to the first calculation is executed, in particular concurrently with the first calculation,
and said second calculation establishes a result interval (C = <c, c_{rad}>),
wherein
the first result (z) of the first calculation is checked for erroneous calculation on the basis of the result interval (C = <c, c_{rad}>) of the second calculation (c, c_{rad}).

2. Method according to claim 1,
**characterised in that**
the floating-point interval is defined by a midpoint (c) and a radius (c_{rad}).

3. Method according to claim 1,
**characterised in that**
the floating-point interval is defined by a minimum value and a maximum value.

4. Method according to one of the preceding claims,
**characterised in that**
the checking of the first result (z) determines whether it lies in the result interval (z ∈ C), this being calculated in particular concurrently by means of the second calculation, which is analogous to the first calculation.

5. Method according to one of the preceding claims,
**characterised in that**
the result interval (C = <c, c_{rad}>), this being calculated in particular concurrently by means of the second calculation, which is analogous to the first calculation, has a permitted interval width (c_{rad} < threshold value).

6. Method according to one of claims 1 to 3, **characterised in that**
the checking takes place by means of operand-dependent tests ((a + 0)/a = 1?).

7. Method according to one of the preceding claims,
**characterised in that**
the safety parameters to be tested are selectable and/or quantifiable.

8. Method according to one of the preceding claims,
**characterised in that**
a first check for ensuring the failsafe calculation is performed by means of a first interval notation, and
a second check of the numeric condition is performed by means of a second interval notation.

9. Method according to claim 8,
**characterised in that**
the result of the check is recorded in a separate check report.

10. Method according to one of the preceding claims,
**characterised in that**
in addition to and independently of the floating-point arithmetic calculations that are performed, a periodically recurring self-test of the arithmetic unit (monoprocessor) is performed.

11. Method according to one of the preceding claims,
**characterised in that**
the data is additionally stored in coded format in a suitable floating-point interval notation, in particular in one's complement or arithmetic AN code.

12. Device for performing floating-point arithmetic in an automation system during the runtime of a program in real time, comprising an engineering environment of the automation system and a processor adapted to the method according to one of claims 1 to 11.

13. Device according to claim 12,
**characterised in that**
an interval map corresponding to an application program is generated, containing the data in a suitable floating-point interval notation.

14. Device according to claim 12 or 13,
**characterised in that**
included are means for receiving a coded interval (Ac, Bc) and
means for decoding (decode) the received interval and means for checking (check) the decoded interval (A, B) and
means for coding (code) the newly calculated interval (C) into a coded interval (Cc).

15. Device according to one of claims 12 to 14,
**characterised in that**
a coupling to a bus protocol, in particular PROFIBUS, is possible.

## Revendications

1. Procédé pour réaliser une arithmétique à virgule flottante dans un système d'automatisation pendant la durée d'exécution d'un programme en temps réel, dans lequel on détermine à partir d'au moins deux données de sortie (x, y) qu'il s'agit des nombres à virgule flottante,
dans un premier calcul en représentation à virgule flottante, selon une arithmétique à virgule flottante standard, un premier résultat (z) et
on convertit chacune des au moins deux données de sortie (x, y) d'une représentation à virgule flottante en une représentation en intervalle à virgule flottante appropriée (A=<a, a_{rad}>, B=<b, b_{rad}>), et
on effectue un second calcul, analogue au premier calcul, à partir des au moins deux données converties en une représentation en intervalle à virgule flottante, en particulier en même temps que le premier calcul,
lequel second calcul détermine un intervalle de résultat (C=<c, c_{rad}>),
le premier résultat (z) du premier calcul étant vérifié à l'aide de l'intervalle de résultat (C=<c, c_{rad}>) du second calcul (c, c_{rad}) quant à la présence d'un calcul erroné.

2. Procédé selon la revendication 1,
**caractérisé en ce que**
l'intervalle à virgule flottante est défini par un centre (c) et un rayon (c_{rad}).

3. Procédé selon la revendication 1,
**caractérisé en ce que**
l'intervalle à virgule flottante est défini par une valeur minimale et une valeur maximale.

4. Procédé selon l'une des revendications précédentes,
**caractérisé en ce que**
la vérification du premier résultat (z) est effectuée dans le but de savoir s'il est compris dans l'intervalle de résultat (z ∈ C) ayant été déterminé en particulier en même temps au moyen du second calcul analogue au premier calcul.

5. Procédé selon l'une des revendications précédentes,
**caractérisé en ce que**
l'intervalle de résultat (C=<c, c_{rad}>) ayant été déterminé en particulier en même temps au moyen du second calcul analogue au premier calcul présente une largeur d'intervalle admissible (c_{rad} < valeur seuil).

6. Procédé selon l'une des revendications 1 à 3,
**caractérisé en ce que**
la vérification s'effectue au moyen de tests en fonction d'opérandes ((a + 0)/a = 1?).

7. Procédé selon l'une des revendications précédentes,
**caractérisé en ce que**
les paramètres de sécurité à tester sont sélectionnables et/ou quantifiables.

8. Procédé selon l'une des revendications précédentes,
**caractérisé en ce que**
une première vérification visant à assurer que le calcul soit exempt d'erreur est effectuée au moyen d'une première représentation en intervalle, et
une seconde vérification de la condition numérique est effectuée au moyen d'une seconde représentation en intervalle.

9. Procédé selon la revendication 8,
**caractérisé en ce que**
le résultat de la vérification est repris dans un rapport de vérification séparé.

10. Procédé selon l'une des revendications précédentes,
**caractérisé en ce que**
en plus et indépendamment des calculs arithmétiques à virgule flottante effectués, un autotest périodique récurrent de l'unité de calcul (monoprocesseur) est effectué.

11. Procédé selon l'une des revendications précédentes,
**caractérisé en ce que**
les données sont en outre enregistrées par une représentation en intervalle à virgule flottante appropriée de façon codée, en particulier codée sous la forme d'un complément à un ou d'un code AN arithmétique.

12. Dispositif pour réaliser une arithmétique à virgule flottante dans un système d'automatisation pendant la durée d'exécution d'un programme en temps réel, comprenant un environnement d'ingénierie du système d'automatisation et
un processeur adapté pour la mise en oeuvre du procédé selon l'une des revendications 1 à 11.

13. Dispositif selon la revendication 12,
**caractérisé en ce que**
on crée pour un programme d'application une reproduction d'intervalle correspondante qui contient les données dans une représentation en intervalle à virgule flottante appropriée.

14. Dispositif selon la revendication 12 ou la revendication 13,
**caractérisé en ce qu'**il contient
des moyens pour recevoir un intervalle codé (Ac, Bc) et des moyens pour décoder (décodage) l'intervalle reçu et des moyens pour vérifier (vérification) l'intervalle décodé (A, B) ainsi que
des moyen pour coder (codage) l'intervalle recalculé (C) en un intervalle codé (Cc).

15. Dispositif selon l'une des revendications 12 à 14,
**caractérisé en ce que**
un couplage à un protocole de bus, notamment PROFIBUS, est possible.
